# EUROPEAN PATENT APPLICATION

(11) **EP 1 564 945 A1**
(43) Date of publication of application: **17.08.2005**
(21) Application number: 04290335.1
(22) Date of filing: 10.02.2004
(51) Int. Cl.: H04L 12/58, H04M 3/533, H04L 29/06

(54) **VXML streaming for a unified messaging system with telephonic user interface**

(71) Applicant: ALCATEL, 75008 Paris (FR)
(72) Inventor: Chaurand, Michel, 67000 Strasbourg (FR); Villars, Sebastian, 67400 Llikirch (FR); Simon, Cédric, 67400 Llikirch (FR)
(74) Representative: Brose, Gerhard, Dipl.-Ing.

(57) **Abstract**

A method and some computer program codes according to the invention allows the playback of some media content almost in real time at some telecommunication terminal without transferring unnecessary parts of such media content between its storage place and that telecommunications terminal. In such a way, any overload will be avoid when some media content being transferred from its storage place to the terminal where it shall be played back. This is achieved by adding a new streaming capability while keeping an architecture for the connection of a mail server, a VXML server, and a media server following the VXML standard. Some kind of agent (codes) in the VXML server transforms the HTTP streaming in streaming supported by the mail access protocol. Advantageously, this agent (a java servlet for example), will be reached by the VXML server through HTTP when the VXML browser (media server) will encounter an audio tag.

## Description

### Technical Field

The present invention relates to a method to playback some media content on a telecommunications terminal connected with a data network comprising a terminal dedicated to perform at least one of the tasks of a mail server, an application server and a media server. Furthermore, it is related to a computer readable medium having a computer program recorded thereon, the computer program comprising codes adapted to perform a procedure defined by steps of said method to playback some media content on a telecommunications terminal when said computer program is run on said application server. It is also related to an application server comprising a computer readable medium having a computer program recorded thereon, the computer program comprising codes adapted to perform said procedure.

### Background of the invention

The explosive growth of the Internet, and particularly the World Wide Web, over the last several years cannot be understated. Virtually any type of information is available to a user who is even only remotely familiar with navigating this network of computers. Yet, there are still instances where information that may be important or even critical to an individual, though otherwise available on the web, is without his or her reach. For example, an individual who is traveling might desire to obtain information regarding flight departures for a particular airline carrier from his current destination using a landline phone, mobile phone, wireless personal digital assistant, or similar device. While that information might be readily available from the Web server of the airline carrier, in the past, the traveler did not have access to the Web server from a phone. Recently, however, advances have been made to marry telephones and telephony-based voice applications with the World Wide Web. One such advance is the Voice Extended Markup Language (VoiceXML).

VoiceXML is a Web-based markup language for representing human/computer dialog. It is similar to Hypertext Markup Language (HTML), but assumes a voice browser having both audio input and output. A typical configuration for a VoiceXML system might include a web server or more generally an application server, and a VoiceXML gateway node (including a voice browser) generally called a media server. Latter is connected to both the Internet and the public switched telephone network (PSTN) or alternately to some intranet and some internal telephone network possibly through some private branch exchange (PBX). The web or application server can provide multimedia files and HTML documents (including scripts and similar programs) when requested by some web browser residing on a client and connected to the web or application server through the Internet or some intranet. The application server can even provide audio/grammar information and VoiceXML documents (including scripts and similar programs), at the requests of the voice browser or media server.

When some user wants to fetch an application via browser (clients side), the application dynamically generates HTML (or XML) that the web or application server conveys as an http response. The user's input (mouse clicks, and/or keyboard entries) are collected by the browser and returned in an HTTP request (GET or POST) to the server where it is processed by the application. This dynamic generation model has been extended by the VoiceXML community for use in speech applications. Server-resident application code interacts with data visible to the server and produces a stream of VoiceXML.

In VoiceXML (VXML), an audio content is reached through an Universal Resource Locator (URL) like <audio src=http://xxxxxxxx/>. In a Unified messaging systems, audio content may be quite large voice messages. They are stored on a mail server. Playing back a voice message with a VXML Telephonic User Interface requires the following steps:
- getting the complete voice message from the mail server to the VXML server (server that generates the dynamic VXML content);
- transferring all the vocal content form the VXML server to the VXML browser;
- sending the vocal content to an private branch exchange (PBX) to which is connected the telecommunication terminal like the phone set on which that vocal content shall be played back.

All those transfers between different computers may cause a high network load. If the voice message is large, the calling user will wait for performing all these transfers before hearing data. Each step has to be completed before starting another step. This means, that the full vocal stream has to be transferred from the mail server to the VXML server. And then, this stream will be, in once, transferred to the VXML browser. The first occurrence of data streaming in the described architecture is between the VXML browser and the PBX.

In US 2003/0035516 is described an architecture based on an interactive voice response operative for voice communication with a telephone network and a data network and including a VXML interpreter, said VXML interpreter being operative to provide a streaming audio output to said data network. Furthermore, said VXML interpreter being the media server comprises an object module which receives digitized voice from buffers in said Interactive voice response (IVR) and provides said streaming audio output. In this prior art, it is the VXML interpreter or browser i.e. the media server which receives digitized audio buffers and provides itself the streaming audio output. This is a non-standard extension of the VXML-standard, i.e. non compatible with all VXML applications. On top of that, the solution described in that prior art implies still a download of the whole audio content on the media server before being able to start with the play back.

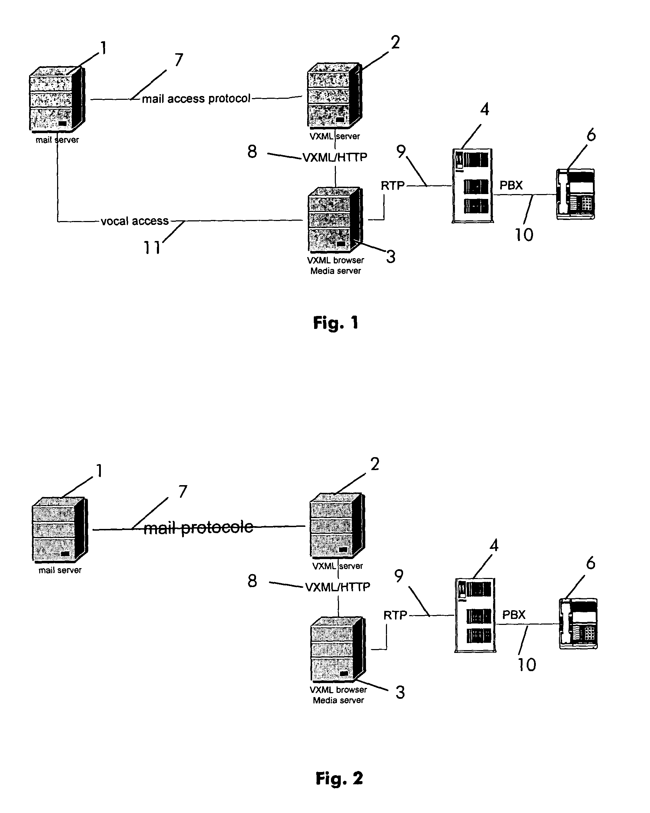

An alternative could be achieved by creating a voice access between the media server (VXML browser) and the mail server. On the figure 1 is shown an example of an architecture using such solution. A mail server 1 is connected to a VXML server 2 where the data are exchanged between both using some mail access protocol 7. The VXML server 2 is itself connected to a VXML browser or media server 3 by some VXML/HTTP-link 8. The mail server1, VXML server 2 and media server 3 are part of a data network possibly an intranet. Such intranet can be connected to a telephone network via a PBX 4 using some Real-time Protocol (RTP) link 9. The telecommunication terminals like a phone set 6 will be then directly connected to that PBX 4 using some link 10 based on a proprietary protocol or Internet protocol. Latter depends if the phone set 6 is already an IP compatible telecommunication terminal. On this alternative as shown on figure 1, the mail server 1 is also connected directly to the media server 3 via a link 11 for the vocal access. When the VXML browser or media server 3 encounters an <audio>tag referring to a voice message than the media server 3 will fetch the vocal content directly from the mail server 1. In this case, the media server 3 can fetch the vocal content, block by block by using a few anticipating blocks and then proceed immediately with the playback.

Such solution as shown on figure 1 is not good enough because the media server 3 (VXML browser) has to know the mail server directly. The media server has to be able to decide when it encounters an audio tag, i.e. if the audio tag refers explicitly to a vocal content of a voice message. And only then, the voice browser or media server has to establish a direct connection with the dedicated mail server 1 to get the correct vocal content of the current voice message. In that case, the media server 3 must be able to identify the mail server 1 as well as the voice message itself and also some vocal part of that voice message if this voice message is made of several vocal parts. All that knowledge is not really in the field of a media server (VXML browser). In fact, if such alternative would be chosen, it would not be possible to use any VXML browser. Indeed, such solution needs a dedicated and proprietary VXML browser.

### Summary of the invention

In view of the above, it is an object of the present invention to provide a method and some computer program codes allowing the playback of some media content almost in real time at some telecommunication terminal without transferring unnecessary parts of such media content between its storage place and that telecommunications terminal. It is also an object of the present invention to avoid any overload occurring when some media content being transferred from its storage place to the terminal where it shall be played back.

This object is achieved in accordance with the invention by keeping an architecture for the connection of the mail server, the VXML server, and the media server following the VXML standard. This is achieved by adding in such architecture a new streaming capability. This is obtained by defining some kind of agent (codes) in the VXML server that transforms the HTTP streaming in streaming supported by the mail access protocol. Advantageously, this agent (a java servlet for example), will be reached by the VXML server through HTTP when the VXML browser (media server) will encounter an audio tag as <audio src="http://myserver.com/myagent"/>. This agent runs in the same context than the Unified Messaging Telephonic User Interface (TUI). Therefore, it will have access to all the data of the current voice message stored on the mail server. This agent will use or share the information about the mailbox and all messages stored in it of a client with the VXML application (TUI for instance).

In accordance with another aspect of the invention, its object is achieved by a method to playback some media content (i.e. audio or video) on a telecommunications terminal (possibly but not necessarily a phone set) connected with a data network comprising usually several terminals dedicated to perform tasks of a mail server, an application server and a media server. Such method comprises the steps of selecting a media content being stored on the mail server, such selection causing a request to be sent via the media server first and then from there to the application server to reach the mail server. This selection will activate some procedure of streaming said media content from the mail server to the application server using a mail access protocol. This procedure will also adapt the received streaming on the application server into an hypertext streaming so to be possible to forward such hypertext streaming to the media server. The different steps of the procedure according to the invention may be applied somehow simultaneously. In such a way, the media content can be further transferred using some Real-time protocol to the telecommunications terminal where it shall be played back almost in real time. Advantageously, the selection of the media content will be performed using some Graphical User Interface on some terminal possibly the telecommunications terminal but not exclusively. Indeed, it is conceivable that the media content to be played back on some telecommunications terminal will be selected from an independent terminal like a PC or PDA or some other kind of electronic device able to communicate with the media server.

Advantageous developments of the invention are described in the dependent claims, the following description and the drawings.

### Brief description of the drawings

An exemplary embodiment of the invention will now be explained further with the reference to the attached drawings in which:
- Fig. 1: is a schematic view of an architecture according to some prior arts;
- Fig. 2: is a schematic view of an architecture as used in the present invention.

### Detailed description of preferred embodiments

On figure 2 is shown an architecture as used according to the invention. A mail server 1 is connected to a VXML server (application server) 2 via a link 7 based on some mail access protocol. The application server 2 is itself connected to a media server (VXML browser) 3 via a link 8 based on a VXML/HTTP. The mail server 1, application server 2 and media server 3 build part of a data network like an intranet to which may be possibly connected a plurality of terminals having an access to the mail server 1 usually through the media server 3 and application server 2. The mail server 1 is the server where e.g. all emails with their attachments of the different clients being part of that intranet are stored. On figure 2 is also shown a PBX 4 which may play the bridge between the data network and some telecommunications network shown here only rudimentary with a telecommunications terminal 6. In fact, a plurality of different kinds of telecommunications terminals like phone set (IP-like or not) will be connected via a link 10 to such PBX 4 building the telecommunications network. This link 10 can be based on some proprietary protocol or also using IP supporting some more or less real time transfer. The PBX 4 is itself connected to the data network via a link 9 directly with the media server 3 based on a real time protocol RTP.

In the context of the present invention, a user having an access to such an intranet will be able to select some media content stored on the mail server 1 by using some graphical user interface on a terminal like a PC, a PDA or even a mobile phone able to access the intranet. Latter could occur using some interface like Bluetooth infrared, or Wifi and possibly combined with some login procedure initiating also the association with some telecommunications terminal 6 of the telecommunications network. In such a way, after a successful login will be performed, the user will have associated to his account some telecommunications terminal to which he may redirect some media content to be played back.

Therefore, the user when selecting some media content stored on the mail server 1 will cause a request to be sent via the media server first and then the application server to the mail server. This request will activate some procedure for streaming said selected media content from the mail server to the application server using a mail access protocol. This procedure will furthermore adapt the received streaming on the application server into an hypertext streaming so to be able to forward it to the media server. The media content will then be transferred from the media server to the PBX 4 using the real time protocol from where it will be forwarded immediately to the telecommunications terminal 6 associated to the user. The media content will then be played back almost in real time on said telecommunications terminal. This gives the user the possibility, for example for an audio message, to hear parts of the message without downloading the whole media content. Indeed, if the user will interrupt the play back of the selected media content the transfer of the media content will be interrupt and almost only the part played back will have been transferred from the mail server via the application server to the media server and further to the selected telecommunication server.

It is also conceivable, that the media server 3 will be retrieving the stream of the media content by blocks such that it will request the blocks one by one from the application server 2 which will fetch each requested block from the media content in the mail server 1. The procedure which will adapt the received streaming on the application server into an hypertext streaming will perform such adaptation for each blocks. Such procedure can be defined by some codes being part of a computer program like a servlet. Such computer program may be preferably recorded on a computer readable medium and running on a computer being said terminal dedicated to perform the applications server task.

It is conceivable, that the mail server 1, the application server 2 and the media server 3 may be located on a single or different physical entities (hardware). Such entities are server like terminals or plug-in cards to be inserted in some kind of electronic computer.

A current implementation of a solution according to the invention will use as the mail protocol access link 7 the so called Internet Message Access Protocol (IMAP 4). The described procedure (agent) is a servlet which is referred in the audio tag when the VXML page is generated by the VXML server (application server 2). In the same time the vocal stream (a java input stream standard interface) is put in the HTTP session. Then the media server retrieves the vocal stream by blocks. Each HTTP/GET refers to the next byte range. In response to the GET requests, the servlet fetches the requested data from the mail server. Latter is performed using an IMAP 4 command FETCH which is sent to the mail server with the associated range of data requested. The servlet implements the adapter design patterns to transform HTTP streaming to IMAP 4 streaming. The media server sends vocal data to the PBX through RTP. This protocol uses a precise time based data transfer. In such a way the media server gets the data it needs for RTP and no more.

Advantageously, a solution according to the present invention fits with the VXML standard. Any VXML browser may be used. The only requirement is that it has to use HTTP 1.1. If a browser does not support the HTTP streaming feature, the agent is also able to send the full stream in once instead block by block. The VXML browser (media server 3) is only linked to the VXML server (application server 2) through an HTTP channel. This solution reduces the network load as much as possible to grant better network and system responsiveness.

## Claims

1. A method to play back some media content on a telecommunications terminal connected with a data network comprising a terminal dedicated to perform at least one of the tasks of a mail server, an application server and a media server, such method comprising the steps of:
• selecting a media content being stored on the mail server, such selection causing a request to be sent via the media server first and then the application server to the mail server
**characterized by** the further steps of:
• activating some procedure of streaming said media content from the mail server to the application server using a mail access protocol;
• adapting the received streaming on the application server into an hypertext streaming;
• forwarding said hypertext streaming to the media server to be further transferred using some real time protocol to said telecommunications terminal to be played back almost in real-time.

2. The method to play back some media content according to claim 1 **characterized** that the media server will be retrieving the stream of the media content by blocks such that it will request the blocks one by one from the application server which will fetch each requested block from the media content in the mail server.

3. The method to play back some media content according to claim 1 **characterized by** selecting said media content using some Graphical User Interface on said telecommunications terminal.

4. The method to play back some media content according to claim 1 **characterized by** selecting said media content using some Graphical User Interface on an independent terminal possibly associated to said telecommunications terminal.

5. A computer readable medium having a computer program recorded thereon, the computer program comprising codes adapted to perform a procedure when said computer program is run on a computer being a terminal dedicated to perform the application server tasks, said procedure being activated when some media content stored on a mail server being selected to be played back on a telecommunications terminal connected with a data network comprising a terminal dedicated to perform at least one of the tasks of a mail server, an application server and a media server, while the procedure performing the steps of:
• initializing a streaming of said media content from the mail server to the application server;
• adapting the received streaming on the application server into an hypertext streaming;
• forwarding said hypertext streaming to the media server to be further transferred using some real time protocol to said telecommunications terminal to be played back almost in real-time.

6. The computer program according to claim 5 **characterized in that** said computer program code means being defined as a servlet.

7. An application server comprising a computer readable medium having a computer program recorded thereon, the computer program comprising codes adapted to perform a procedure to be activated when some media content stored on a mail server being selected to be played back on a telecommunications terminal interconnected with a data network comprising said application server, a terminal dedicated to perform at least one of the tasks of a mail server and a media server, while the procedure performing the steps of:
• initializing a streaming of said media content from the mail server to the application server;
• adapting the received streaming on the application server into an hypertext streaming;
• forwarding said hypertext streaming to the media server to be further transferred using some real time protocol to said telecommunications terminal to be played back almost in real-time.
